# EUROPEAN PATENT SPECIFICATION

(11) **EP 1 842 612 B1**
(45) Date of publication and mention of the grant of the patent: **24.03.2010**
(21) Application number: 07007095.8
(22) Date of filing: 04.04.2007
(51) Int. Cl.: B23B 47/34, B23Q 11/00, B28D 7/02

(54) **Dust collecting cup**
Staubfangaufsatz
Tasse de collecte de poussière

(30) Priority: 07.04.2006 JP 2006106841
(43) Date of publication of application: 10.10.2007
(73) Proprietor: Makita Corporation, Anjo-shi, Aichi (JP)
(72) Inventor: Shinma, Yasutoshi, Anjo-shi, Aichi (JP); Nakashima, Keiji, Anjo-shi, Aichi (JP); Takeuchi, Hajime, Anjo-shi, Aichi (JP)
(74) Representative: Kramer - Barske - Schmidtchen

(56) References cited:
- EP-A1- 0 783 933
- DE-A1- 19 513 748

## Description

### BACKGROUND OF THE INVENTION

The present invention relates to a dust collecting cup which is mounted, for dust collection, on an electric tool such as a hammer drill.

Usually, a dust collecting cup is mounted on an electric tool such as a hammer drill, so that dust arising from a work to be drilled may not be scattered, when drilling work is conducted by rotating a drill bit which is fitted to a chucking mechanism at a distal end of the tool. Japanese Patent Publication No. 9-193146A discloses a dust collecting cup including a cup section in a cylindrical shape, and a container in a cylindrical shape which is coupled to a front end of the cup section so as to cover the drill bit and its surroundings in a non-contact manner. This dust collecting cup is mounted on the electric tool by a side grip (side handle) provided on the electric tool. Specifically, a tension ring of the side grip is fastened to a housing of the tool together with a flange which is extended backward from the cup section, whereby attaching of the side grip and attaching of the dust collecting cup is performed simultaneously.

Generally, the bit of the electric tool is clamped by retaining members such as a plurality of hooks, balls or the like which are provided on the chucking mechanism. When a chuck cover movable in a front-rear direction is moved forward to restrict movement of the retaining members, the bit is locked. When the chuck cover is moved backward to permit the movement of the retaining members, the bit is unlocked and becomes exchangeable.

However, in the dust collecting cup as described above, because the dust collecting cup covers all over the chucking mechanism, it is impossible to operate the chuck cover, while the dust collecting cup is mounted. Therefore, in case of exchanging the bit, it is necessary for an operator to once remove the dust collecting cup, then, to exchange the bit by operating the chuck cover, and thereafter, to mount the dust collecting cup again. These operations are time-consuming and troublesome, thereby lowering workability.

Document DE 195 13 748 A1 which forms the preamble of claim 1 discloses an electric tool having a dust collecting cup. The dust collecting cup has a sleeve fixed to the electric tool and a cover section fixed to the chuck part and relatively rotatable with respect to the sleeve. There is no relative movement of the sleeve and the cover section in axial direction of the tool. For exchanging the tool bit the outer sleeve has to be detached from the tool.

### SUMMARY OF THE INVENTION

It is therefore an object of the invention to provide a dust collecting cup which is excellent in workability, permitting a bit to be rapidly fitted or detached in a short time.

According to the invention, there is provided a dust collecting cup comprising the features of claim 1. Preferred embodiments are defined by the dependent claims.

The operating member may be an annular member. The first direction may be a front-rear direction of the electric tool.

The dust collecting cup may further comprise an elastic member, urging the operating member to a position corresponding to a position that the chuck cover locks the bit.

With the above configuration, it is possible to attach or detach the bit, by operating the chuck cover, even in a state where the dust collecting cup is mounted on the tool. As the results, there is no necessity of attaching or detaching the dust collecting cup every time, and exchange or so of the bit can be rapidly performed in a short time, thus enhancing workability.

### BRIEF DESCRIPTION OF THE DRAWINGS

Fig. 1A is a section view of a dust collecting cup according to a first embodiment of the invention.
Fig. 1B is a section view of the dust collecting cup of Fig. 1A, viewed from another angle.
Fig. 2A is a front view of a front cylinder in the dust collecting cup of Fig. 1A.
Fig. 2B is a side view of the front cylinder of Fig. 2A.
Fig. 2C is a rear view of the front cylinder of Fig. 2A.
Fig. 3A is a front view of a rear cylinder in the dust collecting cup of Fig. 1A.
Fig. 3B is a side view of the rear cylinder of Fig. 3A.
Fig. 3C is a rear view of the rear cylinder of Fig. 3A.

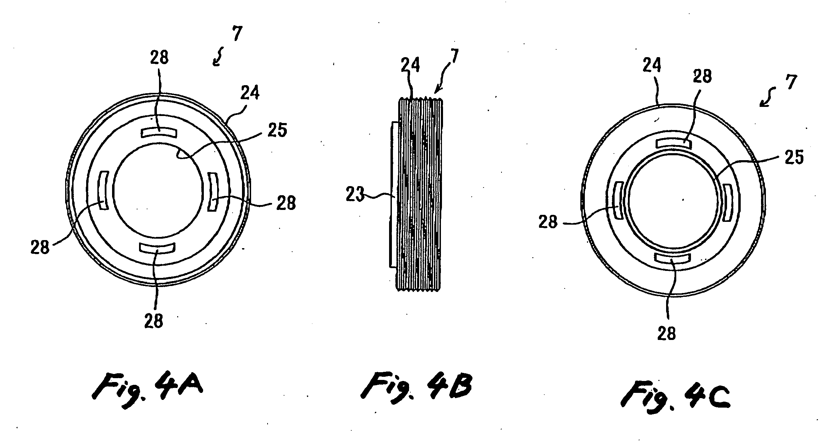

Fig. 4A is a front view of an operating ring in the dust collecting cup of Fig. 1A.
Fig. 4B is a side view of the operating ring of Fig. 4A.
Fig. 4C is a rear view of the operating ring of Fig. 4A.
Fig. 5A is a section view of the dust collecting cup corresponding to Fig. 1A, showing a state that the operating ring is placed in a locking position of a chuck cover for a drill bit.
Fig. 5B is a section view of the dust collecting cup corresponding to Fig. 1B, showing a state that the operating ring is placed in an unlocking position of the chuck cover for the drill bit.
Fig. 6A is a section view of a dust collecting cup according to a second embodiment of the invention.
Fig. 6B is a section view of the dust collecting cup of Fig. 6A, viewed from another angle.
Fig. 7A is a front view of a cylinder body in the dust collecting cup of Fig. 6A.
Fig. 7B is a side view of the cylinder body of Fig. 6A.
Fig. 7C is a rear view of the cylinder body of Fig. 6A.

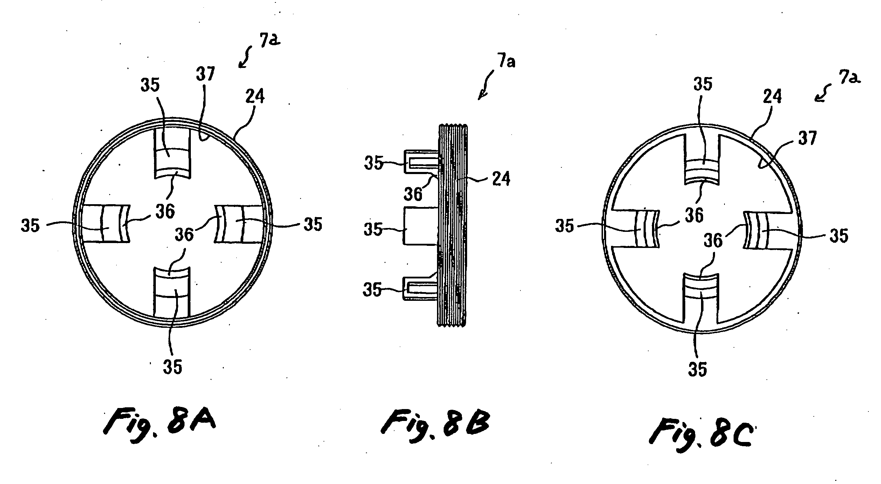

Fig. 8A is a front view of an operating ring in the dust collecting cup of Fig. 6A.
Fig. 8B is a side view of the operating ring of Fig. 6A.
Fig. 8C is a rear view of the operating ring of Fig. 6A.
Fig. 9A is a section view of the dust collecting cup corresponding to Fig. 6A, showing a state that the operating ring is placed in a locking position of a chuck cover for a drill bit.
Fig. 9B is a section view of the dust collecting cup corresponding to Fig. 6B, showing a state that the operating ring is placed in an unlocking position of the chuck cover for the drill bit.
Fig. 10A is a section view of a dust collecting cup according to a third embodiment of the invention.
Fig. 10B is a section view of the dust collecting cup of Fig. 10A, viewed from another angle.
Fig. 11A is a front view of a front cylinder in the dust collecting cup of Fig. 10A.
Fig. 11B is a side view of the front cylinder of Fig. 10A.
Fig. 11C is a rear view of the front cylinder of Fig. 10A.
Fig. 12A is a front view of a rear cylinder in the dust collecting cup of Fig. 10A.
Fig. 12B is a side view of the rear cylinder of Fig. 10A.
Fig. 12C is a rear view of the rear cylinder of Fig. 10A.
Fig. 13A is a front view of an operating ring in the dust collecting cup of Fig. 10A.
Fig. 13B is a side view of the operating ring of Fig. 10A.
Fig. 13C is a rear view of the operating ring of Fig. 10A.
Fig. 14A is a section view of the dust collecting cup corresponding to Fig. 10A, showing a state that the operating ring is placed in a locking position of a chuck cover for a drill bit.
Fig. 14B is a section view of the dust collecting cup corresponding to Fig. 10B, showing a state that the operating ring is placed in an unlocking position of the chuck cover for the drill bit.

### DETAILED DESCRIPTION OF THE EMBODIMENTS

Exemplary embodiments of the invention will be described below in detail with reference to the accompanying drawings.

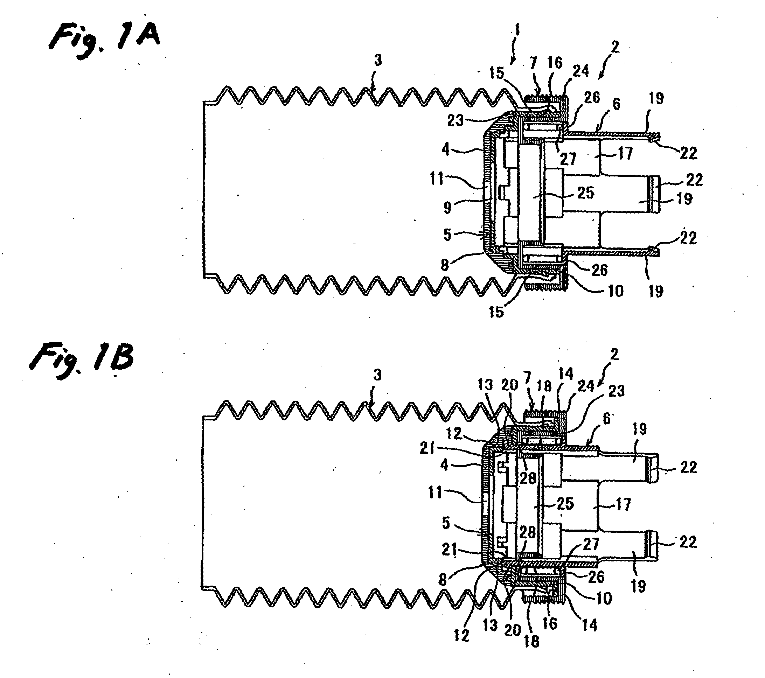

As shown in Figs. 1A and 1B, a dust collecting cup 1 according to a first embodiment of the invention includes a cup section 2 in a cylindrical shape which is mounted on an electric tool such as a hammer drill, and a dust collecting cylinder 3 having bellows which is coaxially mounted over a front end (a left side in these figures) of the cup section 2.

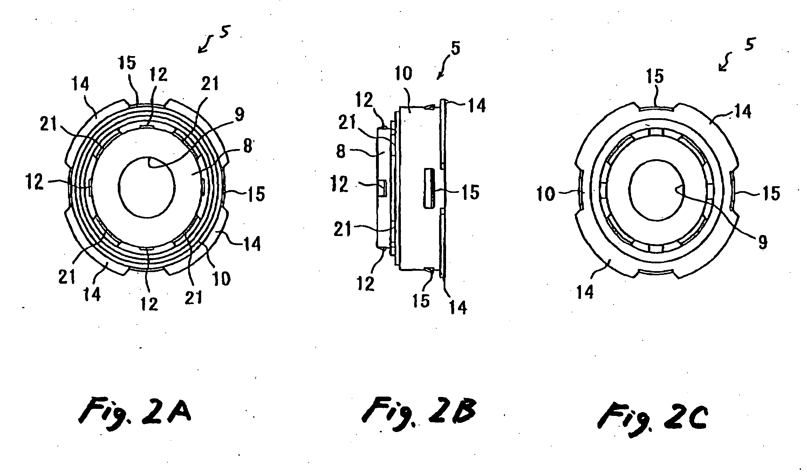

The cup section 2 includes, from the front, a sealing cap 4, a front cylinder 5 to which the sealing cap 4 is fitted, a rear cylinder 6 coupled to the front cylinder 5, and an operating ring 7 which is held between the front cylinder 5 and rear cylinder 6. The front cylinder 5 is a cylindrical body of two step diameters which includes a front small diameter part 8 having a through hole 9 formed at its center, and a rear large diameter part 10, as shown in Figs. 2A to 2C. The sealing cap 4 which has a through hole 11 for the bit at its center is fitted to the small diameter part 8 of the front cylinder 5, by engaging detent protrusions 12 which are provided on a side face of the small diameter part 8 with recesses 13 which are formed on an inner face of the sealing cap 4. A back end of the dust collecting cylinder 3 is inserted over the front cylinder 5, until the back end comes into contact with ribs 14 which are formed at a backward end edge of the large diameter part 10 of the front cylinder 5. In this state, detent protrusions 15 which are formed in front of the ribs 14 are engaged with recesses 16 which are formed on an inner peripheral face of the dust collecting cylinder 3 at the back end thereof, whereby the dust collecting cylinder 3 is integrally coupled to the front cylinder 5.

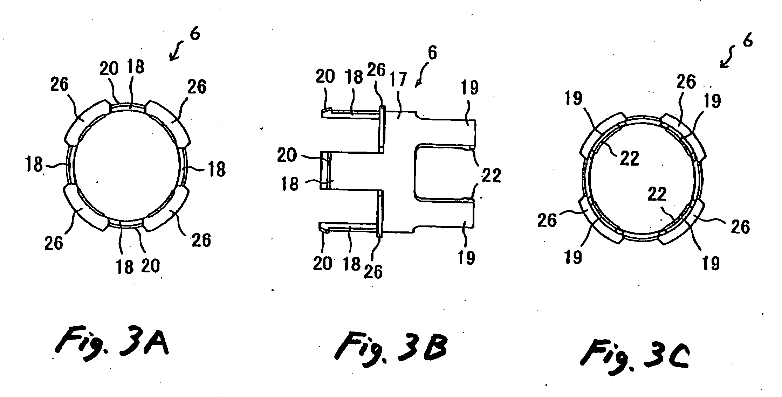

On the other hand, the rear cylinder 6 has a ring part 17 at its center, as shown in Figs. 3A to 3C, four connecting arms 18 which are extended forward from the ring part 17 at equal intervals in a circumferential direction, and four locking arms 19 which are extended backward from the ring part 17 at equal intervals in the circumferential direction. The locking arms 19 are provided at different circumferential positions of the ring part from the positions at which the connecting arms 18 are provided. In this embodiment, the rear cylinder 6 is integrally coupled to the front cylinder 5, by respectively engaging hooks 20 which are projected from outer faces of distal ends of the connecting arms 18 with locking holes 21 which are formed in a root of the small diameter part 8 of the front cylinder 5. Moreover, the locking arms 19 are respectively provided with hooks 22 projecting inward, at backward ends thereof.

The operating ring 7 has a slider 23 which is idly inserted into the large diameter part 10 of the front cylinder 5, an outer ring 24 having an L-shaped cross section (see Figs. 1A and 1B) extended from a back end of the slider 23 so as to cover outer peripheries of the large diameter part 10 and the dust collecting cylinder 3 from the back, and an inner ring 25 having an L-shaped cross section extended from a front end of the slider 23. The inner ring 25 is adapted to move back and forth in an axial direction to such an extent that the inner ring 25 comes into contact with a front wall of the large diameter part 10 and flanges 26 which are formed at the front end of the ring part 17 of the rear cylinder 6. However, a coil spring 27 is inserted between the inner ring 25 and the flanges 26 thereby to urge the operating ring 7 to a front position shown in Figs. 1A and 1B, in which the slider 23 comes in contact with the front wall of the large diameter part 10. Denoted with numerals 28 are through holes which are formed in the inner ring 25 for idly receiving the connecting arms 18 of the rear cylinder 6.

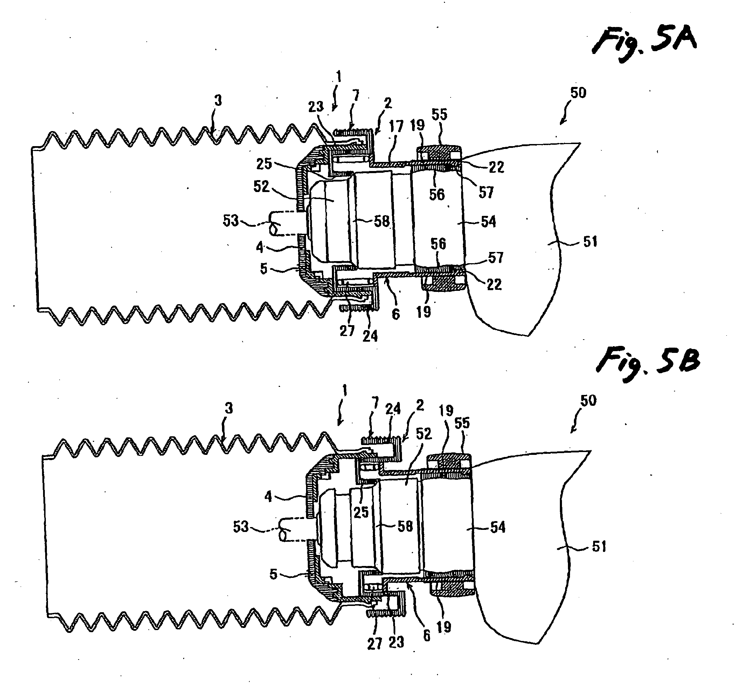

The dust collecting cup 1 having the above described structure is fixed to a hammer drill 50 which is an example of the electric tool, by a side handle, as shown in Fig. 5A, The hammer drill 50 includes a housing 51 in which a rotating and striking mechanism (not shown) is incorporated, and a chucking mechanism provided at a forward end of the housing 51. A drill bit 53 can be fitted to or detached from the chucking mechanism. This chucking mechanism is a well-known mechanism, and so constructed that the drill bit 53 can be held by urging a chuck cover 52 forward (to the locked position) as shown in Fig. 5A, thereby pressing a retaining member (not shown) against an axis of the drill bit 53. When the chuck cover 52 is moved backward to an unlocked position, pressure on the retaining member is released, whereby the drill bit 53 is able to be extracted. The chuck cover 52 is a cylindrical body of two step diameters having a small diameter part in a forward section and a large diameter part in a backward section. A tapered section 58 is formed between the small diameter part and the large diameter part.

Moreover, a fastened part 54 is formed in rear of the chuck cover 52 of the housing 51 so that a clamp part 55 of the side handle may be fixed thereto by fastening. Four grooves 56 which are adapted to be engaged with the locking arms 19 of the cup section 2 of the dust collecting cup 1 are formed in an axial direction on an outer peripheral face of the fastened part 54. Further, recesses 57 which are adapted to be engaged with the hooks 22 of the locking arms 19 are respectively formed at backward ends of the grooves 56.

The cup section 2 of the dust collecting cup 1 is covered over the housing 51 from the front, with the locking arms 19 aligned with the grooves 56 of the fastened part 54, in a state where tight fastening of the fastened part 54 by the clamp part 55 of the side handle is loosened. Then, the cup section 2 is pushed backward in this state, and the hooks 22 of the locking arms 19 is respectively engaged with the recesses 57. By tightening the clamp part 55 in this state, the inner peripheral face of the clamp part 55 is brought into tight contact with outer faces of the locking arms 19 in the grooves 56, whereby the locking arms 19 is restricted from moving both in a circumferential direction and a radial direction of the fasting part 54. Consequently, the cup section 2 is integrally coupled to the fastened part 54, and attaching of the dust collecting cup 1 is completed. In this state, the backward end of the inner ring 25 in the operating ring 7 of the dust collecting cup 1 is positioned close to the tapered section 58 of the chuck cover 52. The backward end of the inner ring 25 is slanted according to an inclination of the tapered section 58.

In order to detach the drill bit 53 for exchanging it or so, the operating ring 7 is moved backward resisting an urge of the coil spring 27, by holding the outer ring 24, as shown in Fig. 5B. Then, the backward end of the inner ring 25 is brought into contact with the tapered section 58 of the chuck cover 52 thereby to move the chuck cover 52 backward integrally. Consequently, the lock of the drill bit 53 is released, thus enabling the drill bit 53 to be detached from the chucking mechanism.

On occasion of fitting the drill bit 53, the operating ring 7 is moved backward in the same manner so that the chuck cover 52 can move backward up to the unlocked position, and thus, insertion of the drill bit 53 is possible. By returning the operating ring 7 to the front position after the insertion, the chuck cover 52 is also returned to the front position in Fig. 5, whereby the lock of the drill bit 53 is achieved. These insertion and extraction of the drill bit 53 may be performed through a front opening of the dust collecting cylinder 3.

In order to detach the dust collecting cup 1 from the housing 51, the clamp part 55 of the side handle is loosened to release detent of the locking arms 19, so that the locking arms 19 can move in a radial direction of the fastened part54. Then, by pulling the cup section 2 forward so as to be extracted, the hooks 22 is disengaged from the recesses 57. In this manner, the dust collecting cup 1 can be detached from the housing 51.

As described above, according to this embodiment, since the cup section 2 is provided with the operating ring 7 which can be operated so as to move the chuck cover 52 in a direction concerned with fitting and detaching of the drill bit 53. Accordingly, by operating the operating ring 7, it is possible to move the chuck cover 52 for enabling the drill bit 53 to be attached or detached, even in a state where the dust collecting cover 1 is mounted on the tool. As the results, there is no necessity of attaching or detaching the dust collecting cup 1 every time, and exchange or so of the drill bit 53 can be rapidly performed in a short time, thus enhancing workability.

Because there is no necessity of detaching the dust collecting cup 1 every time when the drill bit 53 is inserted or extracted, it is unnecessary to form radial slits in the through hole in the sealing cap 4 which is conventionally formed for the purpose of avoiding excessive interference with the drill bit 53, on occasion of attaching or detaching the dust collecting cup 1. As the results, sealing performance of the cup section 2 of the dust collecting cup 1 is enhanced, and dust proofing effect at a side of the hammer drill 50 is also enhanced.

Further, it is possible to move the chuck cover 52 in a cylindrical shape smoothly in the front-rear direction, by employing the operating ring 7, and good operability can be obtained.

Some other embodiments is described below. The same constituent elements as in the first embodiment is denoted with the same reference numerals, and repetitive descriptions will be omitted.

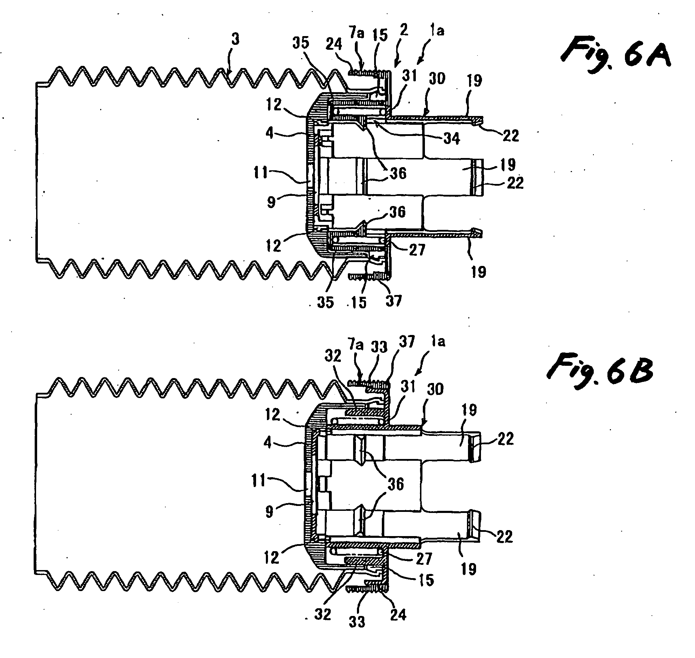

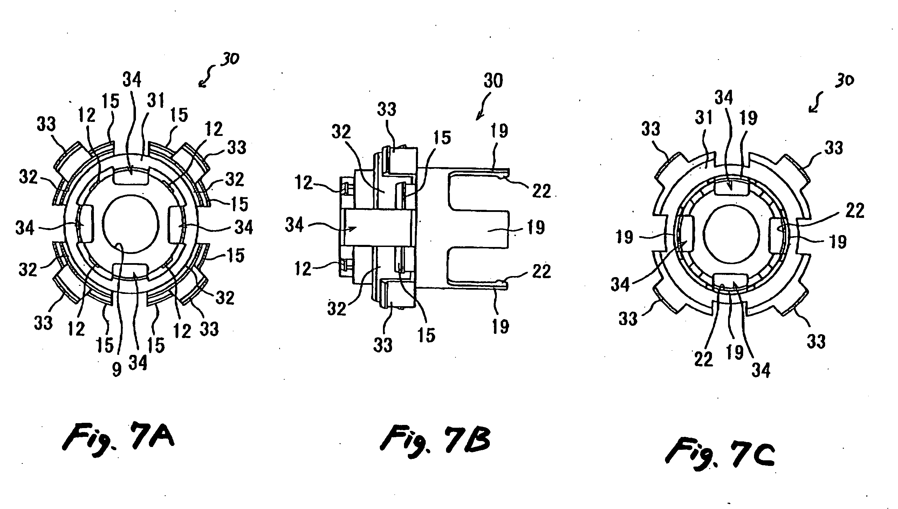

As shown in Figs. 6A and 6B, in a dust collecting cup 1a according to a second embodiment, the cup section 2 includes the sealing cap 4, an operating ring 7a, and a cylinder body 30. As shown in Figs. 7A to 7C, the cylinder body 30 has the detent protrusions 12 for locking the sealing cap 4, at a front end thereof, and the locking arms 19 extended backward. A flange 31 is circumferentially formed in a middle part of the cylinder body 30, and four peripheral walls 32 are provided on an outer circumference of the flange 31 at equal intervals, so as to extend forward. Outside the respective peripheral walls 32, L-shaped locking pieces 33 projected forward from back ends of the peripheral walls 32 are formed keeping determined distances from the peripheral walls 32. The detent protrusions 15 to which the back end of the dust collecting cylinder 3 is adapted to be locked are additionally formed at both sides of the locking pieces 33 in the circumferential direction. Further, slits 34 each having a width equal to an interval between the peripheral walls 32 are formed at a front side of the flange 31 at the same phase as the intervals between the peripheral walls 32, so as to extend up to the through hole 9 on the front face.

On the other hand, as shown in Figs: 8A to 8C, the operating ring 7a is so designed that four hooking pieces 35 each having such a width as can be received in the slit 34 of the cylinder body 30 are formed inside the outer ring 24, at equal intervals concentrically. Press-contact portions 36 adapted to be abutted against the tapered section 58 of the chuck cover 52 are extended backward diagonally from back ends of the hooking pieces 35.

This operating ring 7a is covered over the cylinder body 30 in such a manner the hooking pieces 35 may be respectively received in the slits 34 between the peripheral walls 32 and allowed to move between an front position and a rear position. In the front position, a stepped part 37 formed on an inner periphery of the outer ring 24 is engaged with the locking pieces 33 of the cylinder body 30, while in the rear position, the back ends of the turned back portions of the hooking pieces 35 are in contact with the flange 31 of the cylinder body 30. However, in this embodiment too, the operating ring 7a is urged to the front position in the ordinary condition, as shown in Figs. 6A and 6B, by the coil spring 27 which is interposed between the flange 31 of the cylinder body 30 and the hooking pieces 35.

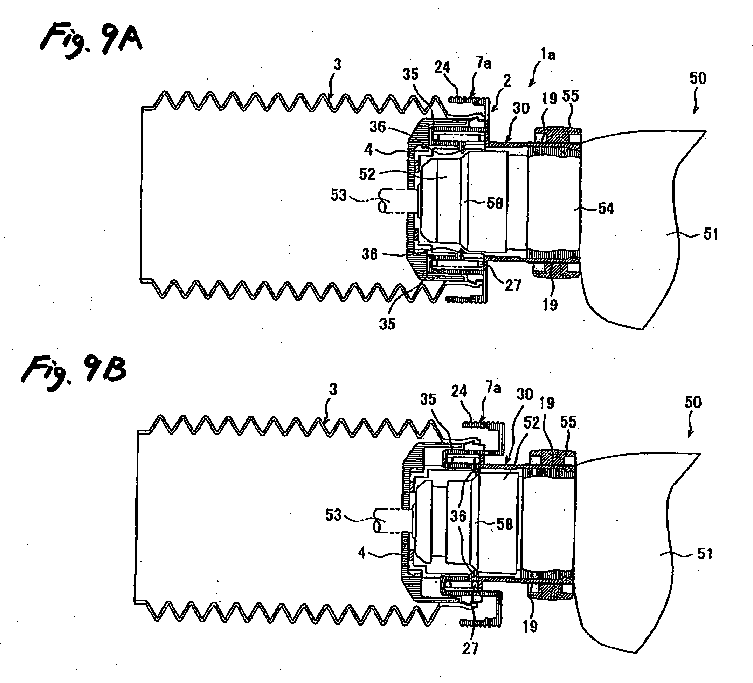

As shown in Fig. 9A, the dust collecting cup 1 a having the above described structure is fixed to the fastened part 54 of the hammer drill 50 by the side handle, in the same manner as in the first embodiment. In this state, the press-contact portions 36 of the operating ring 7a of the dust collecting cup 1a are positioned close to the tapered section 58 of the chuck cover 52. On occasion of detaching the drill bit 53, the operating ring 7a is moved backward against the urging force of the coil spring 27 while holding the outer ring 24, as shown in Fig. 9B. Then, the press-contact portions 36 is brought into contact with the tapered section 58 of the chuck cover 52 thereby to move the chuck cover 52 backward integrally. Consequently, the lock of the drill bit 53 is released, and the drill bit 53 is able to be detached from the chucking mechanism. On occasion of fitting the drill bit 53, substantially the same operation is conducted.

As described above, according to this embodiment, the drill bit 53 can be attached or detached, even in a state where the dust collecting cup 1 a is mounted on the tool. As the results, exchange or so of the drill bit 53 can be rapidly performed in a short time, and thus, workability is enhanced. Particularly, in this embodiment, because the monolithic cylinder body 30 is employed in the cup section 2 of the dust collecting cup 1a, the components can be reduced in number as compared with the first embodiment, thereby decreasing production cost and assembling trouble.

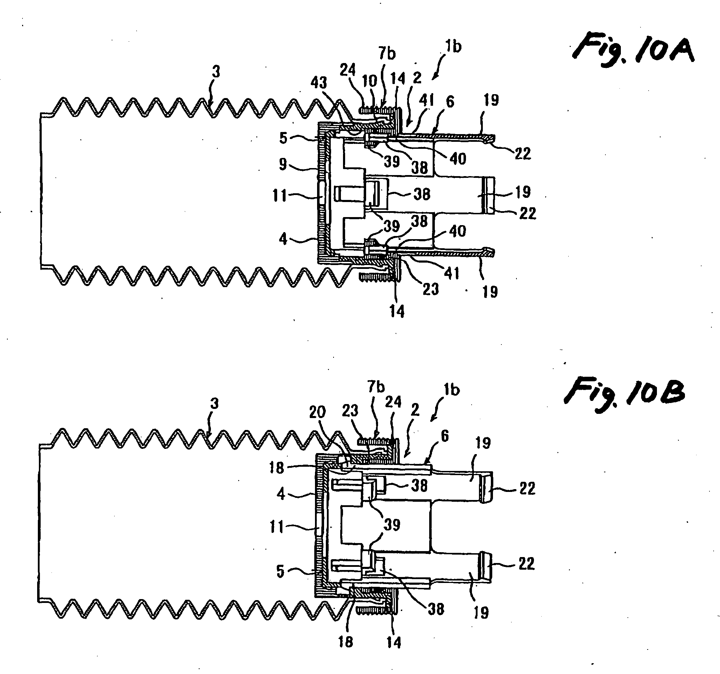

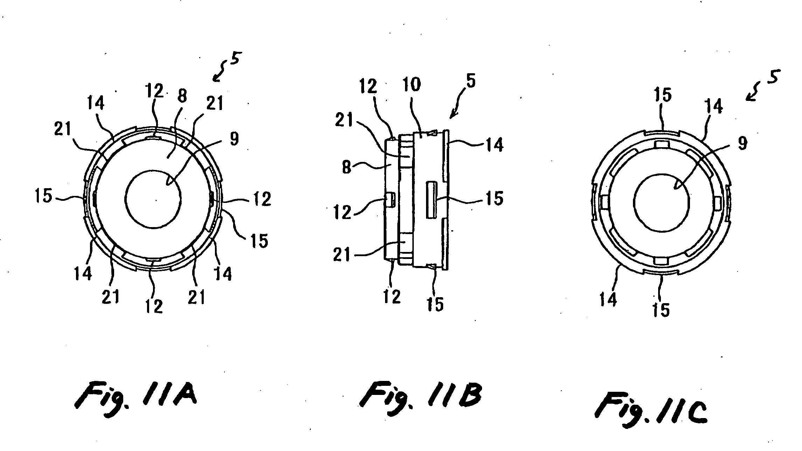

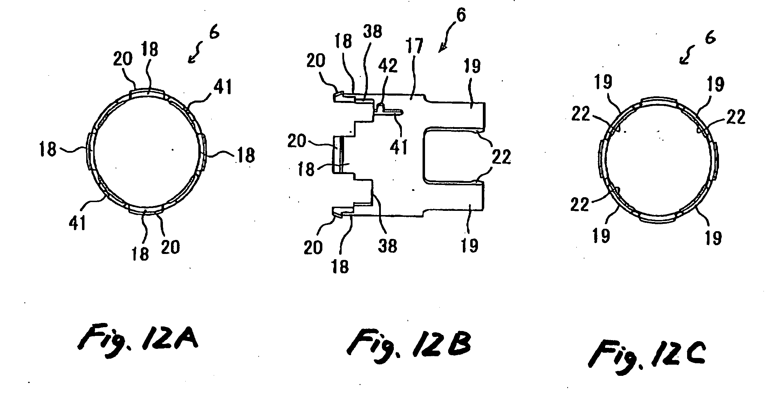

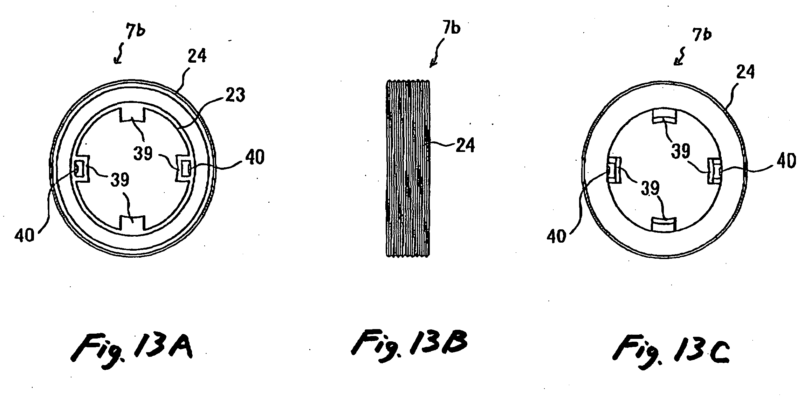

As shown in Figs. 10A and 10B, in a dust collecting cup 1b according to a third embodiment, the cup section 2 includes the front cylinder 5 and the rear cylinder 6, as shown in Figs. 11A through 12C, in the same manner as in the first embodiment. The hooks 20 which are projected from the outer faces of the distal ends of the connecting arms 18 projected forward from the rear cylinder 6 are respectively engaged with the four locking holes 21 which are formed in the root of the small diameter part 8 of the front cylinder 5, whereby the rear cylinder 6 is integrally coupled to the front cylinder 5. The slider 23 which is continuously formed inside the outer ring 24 of an operating ring 7b is fitted over the rear cylinder 6, as shown in Figs. 13A to 13C. L-shaped hooking pieces 39 adapted to be received in cutouts 38 which are formed between the connecting arms 18 of the rear cylinder 6 are formed at a front end of the slider 23, having their inner ends directed backward inside the rear cylinder 6. Because the cutouts 38 are formed having a rather larger width than the hooking pieces 39, the operating ring 7b can rotate in the circumferential direction within such a range that the hooking pieces 39 can slightly move in the cutouts 38.

Moreover, a pair of round protrusions 40 are formed on the inner face of the slider 23 at a position rather backward than a pair of the hooking pieces 39 which are opposed to each other. These round protrusions 40 are idly engaged with grooves 41 which are formed on an outer face of the rear cylinder 6 so as to extend backward from a pair of the cutouts 38 which are positioned point-symmetrically. Stopper recesses 42, into which the round protrusions 40 can enter, are respectively extended from the front ends of the grooves 41 near left side ends of the grooves 41 point-symmetrically in the circumferential direction of the slider 23. Accordingly, the operating ring 7b can move back and forth between the front position where the hooking pieces 39 are in contact with a stepped part 43 formed on the inner face of the front cylinder 5, and the rear position where the hooking pieces 39 are in contact with the rear edges of the cutouts 38.

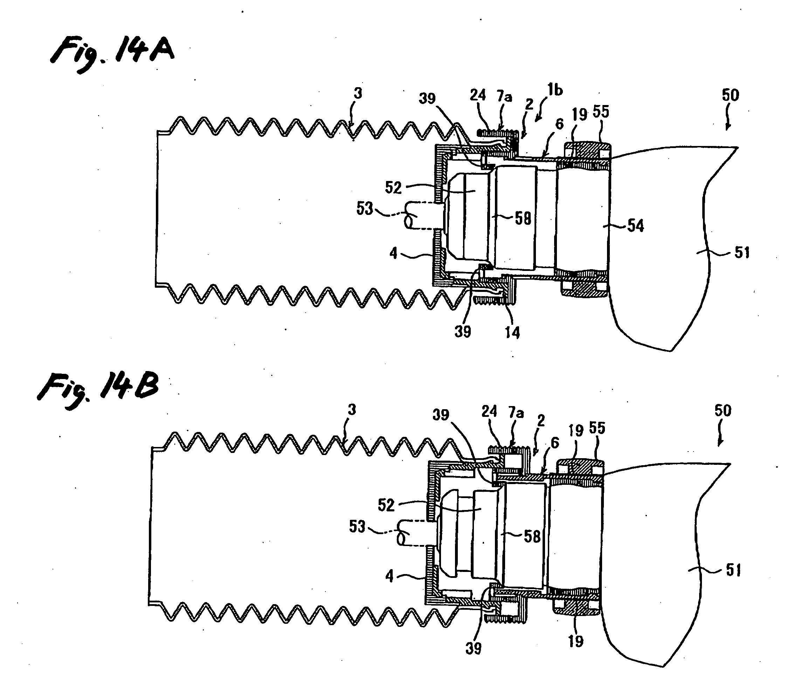

As shown in Fig. 14A, the dust collecting cup 1 b having the above described structure is also fixed to the fastened part 54 of the hammer drill 50 by the side handle, in the same manner as in the above embodiments. In this state, the operating ring 7b of the dust collecting cup 1b in the front position is rotated in a prescribed direction. Then, the round protrusions 40 enter into the stopper recesses 42 of the rear cylinder 6 thereby to prevent the movement of the operating ring 7b in the front-rear direction, and the front position is maintained. At this moment, the hooking pieces 39 of the operating ring 7b are positioned close to the tapered section 58 of the chuck cover 52. In order to detach the drill bit 53, the operating ring 7b is rotated in the opposite direction to the aforesaid direction while holding the outer ring 24, as shown in Fig. 14B, thereby to return the round protrusions 40 into the grooves 41. Then, the operating ring 7b is moved backward in this state, and the hooking pieces 39 is brought into contact with the tapered section 58 of the chuck cover 52, allowing the chuck cover 52 to move backward integrally. In this manner, the lock of the drill bit 53 is released, enabling the drill bit 53 to be detached from the chucking mechanism.

On the other hand, when the drill bit 53 is to be locked, by loosening the operating ring 7b which is held in the backward position, the chuck cover 52 is returned to the front position by an urge of the chuck cover itself, and will press the retaining member thereby to lock the drill bit 53. On this occasion, the operating ring 7b is also returned to the front position at the same time with the chuck cover 52, because the tapered section 58 comes into contact with the hooking pieces 39. In this state, by rotating the operating ring 7b so that the round protrusions 40 may enter into the stopper recesses 42, the back and forth movements of the operating ring 7b is restricted.

As described above, according to this embodiment, the drill bit 53 can be attached or detached, even in a state where the dust collecting cup 1b is mounted on the tool. As the results, exchange or so of the drill bit 53 can be rapidly performed in a short time, and thus, workability is enhanced. In addition, an elastic member such as the coil spring is not employed for the purpose of urging the operating ring 7b of the dust collecting cup 1b, the components can be reduced in number as compared with the first embodiment, thereby decreasing the production cost and assembling trouble.

In the above embodiments, the bit is locked in the front position of the chuck cover, and released in the rear position. However, the bit may be locked in the rear position of the chuck cover, and released in the front position, by making operating direction of the operating member to the contrary. Moreover, the invention is not limited to the embodiments in which the bit can be attached or detached by operating the chuck cover so as to move in the axial direction. Accordingly, the invention can be applied to the motor-driven drill of other types besides the hammer drill, as the electric tool, provided that the dust collecting cup according to the invention can be mounted thereon.

Further, the operating member is not limited to the operating ring in the above described embodiments, but may be appropriately modified in design, depending on a shape of the cup section or so. For example, the outer ring may be substituted with an operating part in a shape of pin or plate which projects intermittently in the circumferential direction.

In addition, the structure of the cup section can be also modified within a range not departed from the gist of the invention. For example, the monolithic-type cylinder body in the second embodiment may be applied to the third embodiment.

## Claims

1. A dust collecting cup adapted to be attached to an electric tool (50) having a chuck cover (52) which is movable between a first position at which a bit (53) is locked by a chucking mechanism and a second position at which the bit (53) is allowed to be attached to or detached from the chucking mechanism while the chuck cover is moved in a first direction, the dust collecting cup(1) comprising a cup section, (2), adapted to be attached to the electric tool (50) and a dust collector (3) coupled to a front part of the cup section (2) and adapted to suround the bit (53) when the cup section (2) is attached to the electric tool (50) **characterized by** an operating member (7) provided in the cup section movable in a first direction between a third position and a forth position relative to the cup section (2) under a condition that the cup section is attached to the electric tool (50), wherein the operating member (7) is adapted to come in contact with the chuck cover (52) placed in the first position when the operating member (7) is moved in the first direction from the third position to the forth position, thereby causing the chuck cover (52) to move in the first direction from the first position to the second position.

2. The dust collecting cup (1) as set forth in claim 1, wherein:
the operating member (7) is an annular member.

3. The dust collecting cup (1) as set forth in claim 1, further comprising:
an elastic member (27), urging the operating member (7) to the third position.

## Patentansprüche

1. Schmutzsammelnapf, der dazu angepasst ist, an einem elektrischen Werkzeug (50) angebracht zu werden, das eine Futterverkleidung (52) aufweist, die zwischen einer ersten Position, an der ein Bit (53) durch einen Futtermechanismus arretiert ist, und einer zweiten Position, an der das Bit (53), während die Futterverkleidung in eine erste Richtung bewegt wird, an dem Futtermechanismus angebracht oder von dem Futtermechanismus entfernt werden kann, bewegbar ist, wobei der Schmutzsammelnapf (1) einen Napfabschnitt (2) aufweist, der dazu angepasst ist, an dem elektrischen Werkzeug (50) angebracht zu werden, und einen Schmutzsammler (3), der mit einem Vorderteil des Napfabschnitts (2) gekoppelt ist und dazu angepasst ist, das Bit (53) zu umgeben, wenn der Napfabschnitt (2) an dem elektrischen Werkzeug (50) angebracht ist, **gekennzeichnet durch** ein Bedienbauteil (7), das in dem Napfabschnitt in einer ersten Richtung zwischen einer dritten Position und einer vierten Position relativ zu dem Napfabschnitt (2) unter einer Bedingung, dass der Napfabschnitt an dem elektrischen Werkzeug (50) angebracht ist, bewegbar vorgesehen ist, wobei das Bedienbauteil (7) dazu angepasst ist, mit der Futterverkleidung (52), die in der ersten Position angeordnet ist, wenn das Bedienbauteil (7) in die erste Richtung von der dritten Position zu der vierten Position bewegt wird, in Kontakt zu kommen, wodurch bewirkt wird, dass sich die Futterverkleidung (52) in die erste Richtung von der ersten Position zu der zweiten Position bewegt.

2. Schmutzsammelnapf (1) nach Anspruch 1, bei dem:
das Bedienbauteil (7) ein ringförmiges Bauteil ist.

3. Schmutzsammelnapf (1) nach Anspruch 1, der weiter enthält:
ein elastisches Bauteil (27), das das Bedienbauteil (7) in die dritte Position drückt.

## Revendications

1. Réceptacle collecteur de poussière destiné à être fixé à un outil électrique (50), ayant un couvre-mandrin (52) qui est mobile entre une première position, dans laquelle une mèche (53) est verrouillée par un mécanisme de serrage, et une deuxième position, dans laquelle la mèche (53) peut être fixée au mécanisme de serrage ou en être détachée, tandis que le couvre-mandrin est déplacé dans un premier sens, le réceptacle collecteur de poussière (1) comprenant une section de réceptacle (2), qui est à même d'être fixée sur l'outil électrique (50), et un collecteur de poussière (3) couplé à une partie avant de la section de réceptacle (2) et destiné à entourer la mèche (53) lorsque la section de réceptacle (2) est fixée à l'outil électrique (50), **caractérisé par** un élément de commande (7) aménagé dans la section de réceptacle et mobile dans un premier sens entre un troisième position et une quatrième position par rapport à la section de réceptacle (2), à condition que la section de réceptacle soit fixée à l'outil électrique (50), dans lequel l'élément de commande (7) est à même de venir en contact avec le couvre-mandrin (52) placé dans la première position lorsque l'élément de commande (7) est déplacé dans le premier sens de la troisième position à la quatrième position, entraînant ainsi le déplacement du couvre-mandrin (52) dans le premier sens de la première position à la deuxième position.

2. Réceptacle collecteur de poussière (1) selon la revendication 1, dans lequel l'élément de commande (7) est un élément annulaire.

3. Réceptacle collecteur de poussière (1) selon la revendication 1, comprenant en outre un élément élastique (27) pressant l'élément de commande (7) dans la troisième position.
